# EUROPÄISCHE PATENTANMELDUNG

(11) **EP 4 718 598 A1**
(43) Veröffentlichungstag der Anmeldung: **01.04.2026**
(21) Anmeldenummer: 25217251.5
(22) Anmeldetag: 06.05.2024
(51) Int. Cl.: H01M 50/204, H01M 50/213

(54) **BATTERIEGEHÄUSE ZUR AUFNAHME EINER VIELZAHL VON BATTERIEKOMPONENTEN, BATTERIE MIT EINEM BATTERIEGEHÄUSE, KRAFTFAHRZEUG MIT EINER BATTERIE**

(30) Priorität: 16.05.2023 DE 102023112942
(62) Teilanmeldung aus: 24724250.6
(71) Anmelder: Kautex Textron GmbH & Co. KG, 53229 Bonn (DE)
(72) Erfinder: WENZEL, Henryk, 53115 Bonn (DE); WOLF, Hartmut, 53639 Königswinter (DE); HELMIG, Raimund, 48477 Hoerstel (DE); MIMBERG, Gero, 50968 Köln (DE); HOOKER, Jack, 50733 Köln (DE)
(74) Vertreter: Richly & Ritschel Patentanwälte PartG mbB

(57) **Zusammenfassung**

Die Erfindung betrifft ein Batteriegehäuse (1) zur Aufnahme von einer Vielzahl von Batteriekomponenten (3), aufweisend eine erste Batteriegehäusekomponente (10), eine zweite Batteriegehäusekomponente (20) und zumindest einen Batteriekomponentenhalter (30), der eine Vielzahl Aufnahmeeinrichtungen (40) zur Aufnahme der Batteriekomponenten (3) aufweist. Der Batteriekomponentenhalter (30) ist sandwichartig zwischen der ersten Batteriegehäusekomponente (10) und der zweiten Batteriegehäusekomponente (20) angeordnet und mit der ersten Batteriegehäusekomponente (10) und/oder mit der zweiten Batteriegehäusekomponente (20) stoffschlüssig verbunden. Die Erfindung betrifft ferner eine Batterie (4) aufweisend ein Batteriegehäuse (1) und ein Kraftfahrzeug aufweisend eine Batterie (4).

## Beschreibung

Die vorliegende Erfindung betrifft ein Batteriegehäuse zur Aufnahme einer Vielzahl von Batteriekomponenten. Ferner betrifft die vorliegende Erfindung eine Batterie mit einem Batteriegehäuse und ein Kraftfahrzeug mit einer Batterie.

Batterien, insbesondere Traktionsbatterien für Kraftfahrzeuge, der neuen Generation sind zur Steigerung der Energiedichte häufig nach dem Prinzip "Cell-to-Pack" aufgebaut. Das bedeutet, dass die Batteriezellen nicht in einzelnen Batteriemodulen in das Batteriegehäuse eingebaut werden. Stattdessen werden die Batteriezellen direkt in das Batteriegehäuse eingebaut. Üblicherweise wird dies durch das vollflächige Verkleben der Batteriezellen oder das vollständige Einbetten der Batteriezellen in Vergussmassen erreicht. Als Vergussmassen kommen typischerweise Polyurethan-Schäume mittlerer Dichte zum Einsatz, die sich durch Adhäsion mit den Batteriezellen und dem Batteriegehäuse verbinden. Die Vergussmasse wirkt dabei als ein elektrischer und thermischer Isolator der Batteriezellen untereinander und sorgt für eine ausreichende Torsions- und Biegesteifigkeit der Batterie. Dadurch kann die Batterie für eine gegebene Kapazität kleiner als eine konventionelle Batterie mit Batteriemodulen ausgeführt werden.

Diese Batterien weisen jedoch den Nachteil auf, dass ein technologisch schwer kontrollierbarer und langsamer Prozess des Vergießens und Aushärtens der Vergussmasse ausgeführt werden muss. Dabei kann es dazu kommen, dass Vergussmasse an nicht vorgesehene Bereiche innerhalb des Batteriegehäuses gelangt. Ferner besteht bei diesen Batterien das Problem, dass die Vergussmasse die für die Füllung vorgesehenen Bereiche im Batteriegehäuse nicht vollständig füllt, wodurch unter Umständen die mechanische und die thermische Leistungsfähigkeit der Batterie beeinträchtigt werden kann. Außerdem kann die ausgehärtete Vergussmasse eine inhomogen verteilte Dichte aufweisen. Ein weiterer Nachteil besteht in einer schlechten Recyclingfähigkeit des Batteriegehäuses, welche insbesondere durch die aufwendige Trennung der Materialien des Batteriegehäuses begründet ist.

Diese Nachteile sind bei aus Kunststoffen bzw. aus faserverstärkten Kunststoffen gebildeten Batteriegehäusen besonders ausgeprägt vorhanden. Die Kunststoffoberflächen des Batteriegehäuses müssen aufwendig vorbehandelt werden, um eine ausreichende Adhäsion zwischen der Vergussmasse und dem Batteriegehäuse zu erreichen. Außerdem ist eine anschließende Trennung der Vergussmasse und einem aus Kunststoff bzw. faserverstärktem Kunststoff gebildeten Batteriegehäuse im Rahmen eines Recyclings nochmals schlechter möglich als bei einem aus Metall gebildeten Batteriegehäuse.

Die DE10 2020 107635 A1 beschreibt beispielsweise eine Batteriehalterung mit einer Aufnahmewanne, einem Deckel und einer Mehrzahl von in der Aufnahmewanne angeordneten Innenträgern, wobei die Innenträger mit der Aufnahmewanne stoffschlüssig, formschlüssig oder kraftschlüssig verbunden sein können.

Der vorliegenden Erfindung liegt die Aufgabe zugrunde, ein Batteriegehäuse zur Aufnahme von Batteriezellen bereitzustellen, welches eine verbesserte Torsions- und Biegesteifigkeit aufweist und dabei gleichzeitig eine verbessert effiziente Recyclingfähigkeit aufweist.

Die der vorliegenden Erfindung zugrundeliegende Aufgabe wird durch ein Batteriegehäuse mit den Merkmalen von Anspruch 1 der vorliegenden Erfindung gelöst. Vorteilhafte Ausgestaltungen des Batteriegehäuses sind in den von Anspruch 1 abhängigen Ansprüchen beschrieben.

Im Genaueren wird die der vorliegenden Erfindung zugrundliegende Aufgabe gelöst durch ein Batteriegehäuse zur Aufnahme von einer Vielzahl von Batteriekomponenten aufweisend eine erste Batteriegehäusekomponente, eine zweite Batteriegehäusekomponente und zumindest einen Batteriekomponentenhalter, der eine Vielzahl Aufnahmeeinrichtungen zur Aufnahme der Batteriekomponenten aufweist. Der Batteriekomponentenhalter ist sandwichartig zwischen der ersten Batteriegehäusekomponente und der zweiten Batteriegehäusekomponente angeordnet, wobei der Batteriekomponentenhalter mit der ersten Batteriegehäusekomponente und/oder mit der zweiten Batteriegehäusekomponente stoffschlüssig verbunden ist.

Das erfindungsgemäße Batteriegehäuse weist den Vorteil auf, dass das Batteriegehäuse eine verbessert effiziente Recyclingfähigkeit aufweist. Dadurch, dass auf eine aufwendig zu verarbeitende Vergussmasse in dem Batteriegehäuse verzichtet wird, ist ein Recycling des Batteriegehäuses ohne aufwendige Trennverfahren zur Trennung der Vergussmasse von den Batteriegehäusekomponenten möglich. Ferner weist das erfindungsgemäße Batteriegehäuse den Vorteil auf, dass das Batteriegehäuse eine verbesserte Torsions- und Biegesteifigket aufweist. Dadurch, dass der Batteriekomponentenhalter mit der ersten Batteriegehäusekomponente und/oder mit der zweiten Batteriegehäusekomponente verbunden ist, kann das Batteriegehäuse verbessert Schub- und Biegekräfte aufnehmen. Schließlich weist das erfindungsgemäße Batteriegehäuse den Vorteil auf, dass das Batteriegehäuse eine verbesserte elektrische und thermische Isolation von in dem Batteriegehäuse aufnehmbaren Batteriekomponenten, insbesondere Batteriezellen, untereinander aufweist.

Das Merkmal, gemäß dem der Batteriekomponentenhalter sandwichartig zwischen der ersten Batteriegehäusekomponente und der zweiten Batteriegehäusekomponente angeordnet ist, kann auch so ausgedrückt werden, dass der Batteriekomponentenhalter als Sandwichkern zwischen der ersten Batteriegehäusekomponente und der zweiten Batteriegehäusekomponente angeordnet ist. Folglich kann der Batteriekomponentenhalter auch als Sandwichkern bezeichnet werden.

Die erste Batteriegehäusekomponente ist vorzugsweise als Batteriegehäuseschale ausgebildet. Die erste Batteriegehäusekomponente kann auch als Batteriegehäuseunterschale oder allgemein als Unterschale bezeichnet werden.

Die zweite Batteriegehäusekomponente ist vorzugsweise als Batteriegehäuseschale oder als Batteriegehäusedeckel ausgebildet, wobei der Batteriegehäusedeckel ebenfalls als Batteriegehäuseschale ausgebildet sein kann. Die zweite Batteriegehäusekomponente kann auch als Batteriegehäuseoberschale oder allgemein als Oberschale bezeichnet werden.

Die Aufnahmeeinrichtungen des Batteriekomponentenhalters sind als Aufnahmevertiefungen und/oder als Durchgangsöffnungen in dem Batteriekomponentenhalter ausgebildet.

Ein derart ausgebildetes Batteriegehäuse weist den Vorteil auf, dass die Batteriekomponenten in den Aufnahmeeinrichtungen des Batteriekomponentenhalters des Batteriegehäuses vereinfacht aufnehmbar sind.

Die Batteriekomponenten sind vorzugsweise als Batteriezellen ausgebildet. Die Batteriezellen sind vorzugsweise als zylindrische Batteriezellen ausgebildet. Ferner ist es auch möglich, dass die Batteriekomponenten als Batteriemodule ausgebildet sind.

Vorzugsweise ist das Batteriegehäuse als ein Traktionsbatteriegehäuse für eine Traktionsbatterie eines elektrisch antreibbaren Kraftfahrzeugs ausgebildet.

Vorzugsweise ist das Traktionsbatteriegehäuse an einer Karosserie eines Kraftfahrzeugs montierbar.

Vorzugsweise weisen die Aufnahmeeinrichtungen des Batteriekomponentenhalters ein Aufnahmevolumen auf. Das Aufnahmevolumen wird vorzugsweise durch eine innere Wandung der Aufnahmeeinrichtung zumindest teilweise begrenzt.

Vorzugsweise weisen die Aufnahmeeinrichtungen des Batteriekomponentenhalters eine erste Aufnahmeöffnung und/oder eine zweite Aufnahmeöffnung auf. Die erste Aufnahmeöffnung ist vorzugsweise einer Grundfläche der ersten Batteriegehäusekomponente gegenüberliegend angeordnet. Die zweite Aufnahmeöffnung ist vorzugsweise einer Grundfläche der zweiten Batteriegehäusekomponente gegenüberliegend angeordnet. Eine Batteriekomponente kann durch die erste Aufnahmeöffnung oder die zweite Aufnahmeöffnung in die Aufnahmeeinrichtung eingesetzt werden.

Die Aufnahmeeinrichtungen des Batteriekomponentenhalters können auch als Aufnahmekavitäten bezeichnet werden.

Vorzugsweise weisen die Aufnahmeeinrichtungen des Batteriekomponentenhalters einen teilkreisförmig oder kreisförmig ausgebildeten freien Querschnitt auf.

Wiederum vorzugsweise weisen die Aufnahmeeinrichtungen des Batteriekomponentenhalters einen freien Querschnitt auf, der im Wesentlichen einem Querschnitt einer in dem Batteriegehäuse aufnehmbaren Batteriekomponente entspricht.

Ein derart ausgebildetes Batteriegehäuse weist den Vorteil auf, dass die Batteriekomponenten in den Aufnahmeeinrichtungen des Batteriekomponentenhalters des Batteriegehäuses vereinfacht aufnehmbar sind.

Vorzugsweise ist das Batteriegehäuse derart ausgebildet, dass der Batteriekomponentenhalter eine Mehrzahl von Verbindungsflächen aufweist, die stirnseitig an dem Batteriekomponentenhalter angeordnet sind, wobei der Batteriekomponentenhalter mit der ersten Batteriegehäusekomponente und/oder der zweiten Batteriegehäusekomponente mittels der Mehrzahl der Verbindungsflächen stoffschlüssig verbunden ist.

Ein derart ausgebildetes Batteriegehäuse weist den Vorteil auf, dass das Batteriegehäuse eine nochmals verbesserte Torsions- und Biegesteifigkeit aufweist.

Vorzugsweise sind die Verbindungsflächen teilkreisförmig, kreisförmig oder linienförmig ausgebildet. Ein derart ausgebildetes Batteriegehäuse weist den Vorteil auf, dass der Batteriekomponentenhalter verbessert mit der ersten Batteriegehäusekomponente und/oder mit der zweiten Batteriegehäusekomponente verbunden ist. Dadurch weist das Batteriegehäuse eine nochmals verbesserte Torsions- und Biegesteifigkeit auf.

Vorzugsweise sind die Verbindungsflächen kreisförmig um die erste Aufnahmeöffnung und/oder um die zweite Aufnahmeöffnung der Aufnahmeeinrichtungen des Batteriekomponentenhalters angeordnet.

Vorzugsweise weist der Batteriekomponentenhalter zumindest eine Positioniereinrichtung auf, die stirnseitig an dem Batteriekomponentenhalter angeordnet ist, wobei die Positioniereinrichtung des Batteriekomponentenhalters in einer zu der Positioniereinrichtung korrespondierenden Positionieraufnahme der ersten Batteriegehäusekomponente und/oder der zweiten Batteriegehäusekomponente aufgenommen ist.

Ein derart ausgebildetes Batteriegehäuse weist den Vorteil auf, dass der Batteriekomponentenhalter verbessert in dem Batteriegehäuse positioniert und mit der ersten Batteriegehäusekomponente und/oder mit der zweiten Batteriegehäusekomponente verbunden werden kann. Dadurch weist das Batteriegehäuse eine nochmals verbesserte Torsions- und Biegesteifigkeit auf.

Eine Positioniereinrichtung und eine Positionieraufnahme korrespondieren zueinander, wenn die Positioniereinrichtung in der Positionieraufnahme aufgenommen werden kann. Mit anderen Worten entspricht der freie Querschnitt der Positionieraufnahme dem Querschnitt der Positioniereinrichtung.

Die Positioniereinrichtung ist vorzugsweise als Positionierstift ausgebildet, wobei der Positionierstift von einer Stirnfläche des Batteriekomponentenhalters vorragt. Der Positionierstift ist vorzugsweise als Zylinder ausgebildet.

Die Positionieraufnahme ist vorzugsweise als Positioniervertiefung ausgebildet, wobei die Positioniervertiefung auf einer Grundfläche der ersten Batteriegehäusekomponente und/oder auf einer Grundfläche der zweiten Batteriegehäusekomponente angeordnet ist. Die Positioniervertiefung weist vorzugsweise einen kreisförmigen freien Querschnitt auf, sodass ein als Zylinder ausgebildeter Positionierstift in der Positioniervertiefung aufgenommen werden kann.

Vorzugsweise ist das Batteriegehäuse derart ausgebildet, dass die Verbindungsflächen des Batteriekomponentenhalters jeweils als Verbindungsvorsprünge ausgebildet sind, die aus einer Stirnfläche des Batteriekomponentenhalters vorragen.

Ein derart ausgebildetes Batteriegehäuse weist den Vorteil auf, dass das Batteriegehäuse eine nochmals verbesserte Torsions- und Biegesteifigkeit aufweist.

Vorzugsweise weisen die Verbindungsvorsprünge bei Draufsicht auf eine Stirnseite einen teilkreisförmigen oder kreisförmigen Querschnitt auf. Mit anderen Worten können die Verbindungsvorsprünge als Zylinder ausgebildet sein.

In Einbaulage des Batteriegehäuses, beispielsweise in ein Kraftfahrzeug, verläuft die Stirnfläche des Batteriekomponentenhalters in horizontaler Richtung.

In Einbaulage des Batteriegehäuses, beispielsweise in ein Kraftfahrzeug, verlaufen die Grundfläche der ersten Batteriegehäusekomponente und die Grundfläche der zweiten Batteriegehäusekomponente in horizontaler Richtung. Insbesondere verlaufen die Stirnfläche des Batteriekomponentenhalters und die Grundfläche der ersten Batteriegehäusekomponente und die Grundfläche der zweiten Batteriegehäusekomponente parallel zueinander.

Vorzugsweise weist der Batteriekomponentenhalter zwei Stirnflächen auf, wobei die zwei Stirnflächen zueinander beabstandet angeordnet sind. In Einbaulage des Batteriegehäuses, beispielsweise in ein Kraftfahrzeug, verlaufen beide Stirnflächen des Batteriekomponentenhalters in horizontaler Richtung, wobei eine erste Stirnfläche der Grundfläche der ersten Batteriegehäusekomponente gegenüberliegend angeordnet ist und eine zweite Stirnfläche der Grundfläche der zweiten Batteriegehäusekomponente gegenüberliegend angeordnet ist.

Vorzugsweise ist das Batteriegehäuse derart ausgebildet, dass die Verbindungsvorsprünge bei Draufsicht auf eine Stirnfläche des Batteriekomponentenhalters an drei Aufnahmeeinrichtungen angrenzend angeordnet sind.

Ein derart ausgebildetes Batteriegehäuse weist den Vorteil auf, dass das Batteriegehäuse eine nochmals verbesserte Torsions- und Biegesteifigkeit aufweist. Durch die regelmäßige Anordnung der Verbindungsvorsprünge auf einer Stirnfläche kann der Batteriekomponentenhalter verbessert sandwichartig mit der ersten Batteriegehäusekomponente und/oder der zweiten Batteriegehäusekomponente verbunden werden.

Vorzugsweise ist das Batteriegehäuse derart ausgebildet, dass die Verbindungsvorsprünge bei Draufsicht auf eine Stirnfläche des Batteriekomponentenhalters zwischen zwei Aufnahmeeinrichtungen des Batteriekomponentenhalters angeordnet sind.

Vorzugsweise ist das Batteriegehäuse derart ausgebildet, dass der Batteriekomponentenhalter mit der ersten Batteriegehäusekomponente und/oder mit der zweiten Batteriegehäusekomponente mittels Verschweißung und/oder Verklebung stoffschlüssig verbunden ist.

Ein derart ausgebildetes Batteriegehäuse weist den Vorteil auf, dass das Batteriegehäuse eine verbesserte Torsions- und Biegesteifigkeit aufweist.

Vorzugsweise ist die Verschweißung zwischen dem Batteriekomponentenhalter und der ersten Batteriegehäusekomponente und/oder der zweiten Batteriegehäusekomponente mittels Ultraschallschweißverfahren hergestellt.

Ein derart ausgebildetes Batteriegehäuse weist den Vorteil auf, dass das Batteriegehäuse eine verbessert effiziente Recyclingfähigkeit aufweist. Aufgrund der Verschweißung sind keine Materialreste von Klebstoffen vorhanden, sodass ein Recyclingprozess weniger aufwendig ausgeführt werden kann.

Vorzugsweise ist das Batteriegehäuse derart ausgebildet, dass die erste Batteriegehäusekomponente eine Mehrzahl von Verbindungsvorsprüngen aufweist, die an einer einem Aufnahmevolumen des Batteriegehäuses zugewandten Grundfläche angeordnet sind und sich in das Aufnahmevolumen erstrecken, und/oder die zweite Batteriegehäusekomponente eine Mehrzahl von Verbindungsvorsprüngen aufweist, die an einer dem Aufnahmevolumen des Batteriegehäuses zugewandten Grundfläche angeordnet sind und sich in das Aufnahmevolumen erstrecken, wobei der Batteriekomponentenhalter mit der ersten Batteriegehäusekomponente und/oder mit der zweiten Batteriegehäusekomponente mittels der Mehrzahl der Verbindungsvorsprünge stoffschlüssig verbunden ist.

Ein derart ausgebildetes Batteriegehäuse weist den Vorteil auf, dass das Batteriegehäuse eine nochmals verbesserte Torsions- und Biegesteifigkeit aufweist.

Vorzugsweise weisen die Verbindungsvorsprünge bei Draufsicht auf eine Stirnseite einen teilkreisförmigen oder kreisförmigen Querschnitt auf. Mit anderen Worten können die Verbindungsvorsprünge als Zylinder ausgebildet sein.

Vorzugsweise ist das Batteriegehäuse derart ausgebildet, dass der Batteriekomponentenhalter mit der ersten Batteriegehäusekomponente und/oder mit der zweiten Batteriegehäusekomponente zusätzlich formschlüssig und/oder kraftschlüssig verbunden ist.

Ein derart ausgebildetes Batteriegehäuse weist den Vorteil auf, dass das Batteriegehäuse eine nochmals verbesserte Torsions- und Biegesteifigkeit aufweist.

Vorzugsweise ist der Batteriekomponentenhalter mit der ersten Batteriegehäusekomponente und/oder der zweiten Batteriegehäusekomponente mittels einer Verzahnung und/oder einer Hintergreifung und/oder einer Klemmverbindung zusätzlich formschlüssig und/oder kraftschlüssig verbunden.

Ein derart ausgebildetes Batteriegehäuse weist den Vorteil auf, dass das Batteriegehäuse eine nochmals verbesserte Torsions- und Biegesteifigkeit und gleichzeitig eine verbessert effiziente Recyclingfähigkeit aufweist.

Eine Verzahnung und/oder eine Hintergreifung und/oder Klemmverbindung weisen jeweils zumindest zwei zueinander korrespondierende Verbindungsmittel auf. Zwei zueinander korrespondierende Verbindungsmittel sind dazu ausgebildet, miteinander in Verbindung gebracht zu werden und diese Verbindung kraftschlüssig und/oder formschlüssig aufrecht zu erhalten.

Eine Verzahnung weist zumindest zwei zueinander korrespondierende Verzahnungsreihen auf.

Eine Hintergreifung kann als eine Verklipsung ausgebildet sein. Eine Verklipsung weist zumindest einen Clips und zumindest eine zu dem Clips korrespondierende Clips-Aufnahme auf. Die Clips-Aufnahme kann als eine Aufnahmevertiefung ausgebildet sein, wobei die Aufnahmevertiefung zumindest einen Hinterschnitt aufweist, der dazu eingerichtet ist, einen in der Aufnahmevertiefung aufgenommenen Clips zu hintergreifen. Vorzugsweise weist die Aufnahmevertiefung zwei Hinterschnitte auf.

Eine Hintergreifung kann als eine Schnapphaken-Verbindung ausgebildet sein. Eine Schnapphaken-Verbindung weist zumindest einen Schnapphaken und eine zu dem Schnapphaken korrespondierende Schnapphaken-Aufnahme auf. Die Schnapphaken-Aufnahme kann als eine Aufnahmevertiefung ausgebildet sein, wobei die Aufnahmevertiefung zumindest einen Hinterschnitt aufweist, der dazu eingerichtet ist, einen in der Aufnahmevertiefung aufgenommenen Schnapphaken zu hintergreifen.

Eine Klemmverbindung kann als eine Zapfen-Nut-Verbindung ausgebildet sein. Eine Zapfen-Nut-Verbindung weist zumindest einen Zapfen, vorzugsweise eine zylinderförmigen Zapfen, und eine zu dem Zapfen korrespondierende Aufnahmenut auf. Ein Querschnitt des Zapfens kann größer als ein freier Querschnitt der korrespondierenden Aufnahmenut ausgebildet sein, sodass eine Quetschverbindung zwischen dem Zapfen und der Aufnahmenut ausgebildet ist, wenn der Zapfen und der Aufnahmenut aufgenommen ist.

Vorzugsweise ist eines der zueinander korrespondierenden Verbindungsmittel einer Verzahnung und/oder einer Hintergreifung und/oder einer Klemmverbindung monolithisch mit dem Batteriekomponentenhalter ausgebildet. Das jeweils zugehörige korrespondierende Verbindungsmittel ist vorzugsweise monolithisch mit der ersten Batteriegehäusekomponente und/oder mit der zweiten Batteriegehäusekomponente ausgebildet.

Zwei monolithisch miteinander verbundene Bauteile sind aus dem gleichen Bauteil hergestellt und insbesondere fugenlos miteinander verbunden.

Ein derart ausgebildetes Batteriegehäuse weist den Vorteil auf, dass das Batteriegehäuse eine nochmals verbessere Recyclingfähigkeit bei gleichzeitig verbesserter Torsions- und Biegesteifigkeit aufweist. Dadurch, dass die Verbindungselemente integraler Bestandteil des Batteriekomponentenhalters und/oder der ersten Batteriegehäusekomponente und/oder der zweiten Batteriegehäusekomponente sind, weist das Batteriegehäuse eine nochmals geringere Anzahl von verschiedenen Materialien auf und weist dadurch eine nochmals verbessert effiziente Recyclingfähigkeit auf. Beispielsweise kann das Batteriegehäuse nach Entfernung der Batteriekomponenten und der weiteren elektrischen Bestandteile in einem Stück mechanisch zerkleinert werden und beispielsweise zu Kunststoffrecyclat weiterverarbeitet werden.

Vorzugsweise ist das Batteriegehäuse derart ausgebildet, dass der Batteriekomponentenhalter ein erstes Batteriekomponentenhalterteil und ein zweites Batteriekomponentenhalterteil aufweist, wobei das erste Batteriekomponentenhalterteil mit der ersten Batteriegehäusekomponente stoffschlüssig verbunden ist und das zweite Batteriekomponentenhalterteil mit der zweiten Batteriegehäusekomponente stoffschlüssig verbunden ist. Eine erste Stirnseite des ersten Batteriekomponentenhalterteils ist einer zweiten Stirnseite des zweiten Batteriekomponentenhalterteils gegenüberliegend angeordnet und ist mit dieser verbunden.

Ein derart ausgebildetes Batteriegehäuse weist den Vorteil auf, dass Batteriekomponenten, insbesondere Batteriezellen, vereinfacht in dem Batteriegehäuse angeordnet werden können, und dass das Batteriegehäuse gleichzeitig eine verbesserte Torsions- und Biegesteifigkeit aufweist.

Vorzugsweise ist das erste Batteriekomponentenhalterteil mit der ersten Batteriegehäusekomponente durch Verschweißung und/oder Verklebung stoffschlüssig verbunden. Alternativ oder zusätzlich ist das erste Batteriekomponentenhalterteil vorzugsweise mit der ersten Batteriegehäusekomponente formschlüssig und/oder kraftschlüssig verbunden. Die formschlüssige und/oder kraftschlüssige Verbindung kann als eine Verzahnung und/oder als eine Hintergreifung und/oder als eine Klemmverbindung ausgebildet sein.

Vorzugsweise ist das zweite Batteriekomponentenhalterteil mit der zweiten Batteriegehäusekomponente durch Verschweißung und/oder Verklebung stoffschlüssig verbunden. Alternativ oder zusätzlich ist das zweite Batteriekomponentenhalterteil vorzugsweise mit der zweiten Batteriegehäusekomponente formschlüssig und/oder kraftschlüssig verbunden. Die formschlüssige und/oder kraftschlüssige Verbindung kann als eine Verzahnung und/oder Hintergreifung und/oder als eine Klemmverbindung ausgebildet sein.

Vorzugsweise ist die erste Stirnseite des ersten Batteriekomponentenhalterteils mit der zweiten Stirnseite des zweiten Batteriekomponentenhalterteils stoffschlüssig verbunden, insbesondere durch Verschweißung und/oder Verklebung stoffschlüssig verbunden.

Vorzugsweise weist die erste Stirnseite des ersten Batteriekomponentenhalterteils Verbindungsvorsprünge auf, die von der ersten Stirnseite vorragen. Vorzugsweise weist die zweite Stirnseite des zweiten Batteriekomponentenhalterteils Verbindungsvorsprünge auf, die von der zweiten Stirnseite vorragen.

Vorzugsweise ist die erste Stirnseite des ersten Batteriekomponentenhalterteils mit der zweiten Stirnseite des zweiten Batteriekomponentenhalterteils zusätzlich oder alternativ kraftschlüssig verbunden, insbesondere durch eine Klemmverbindung kraftschlüssig verbunden.

Vorzugsweise ist die erste Stirnseite des ersten Batteriekomponentenhalterteils mit der zweiten Stirnseite des zweiten Batteriekomponentenhalterteils zusätzlich oder alternativ formschlüssig verbunden, insbesondere durch eine Hintergreifung und/oder durch eine Verzahnung formschlüssig verbunden.

In Einbaulage des Batteriegehäuses, beispielsweise in ein Kraftfahrzeug, verlaufen die erste Stirnseite des ersten Batteriekomponentenhalterteils und die zweite Stirnseite des zweiten Batteriekomponentenhalterteils in horizontaler Richtung. Anders formuliert weist der Batteriekomponentenhalter eine horizontale Teilung auf, welche den Batteriekomponentenhalter in ein erstes Batteriekomponentenhalterteil und in ein zweites Batteriekomponentenhalterteil teilt. In Einbaulage des Batteriegehäuses, beispielsweise in ein Kraftfahrzeug, verlaufen die erste Stirnseite des ersten Batteriekomponentenhalterteils und die zweite Stirnseite des zweiten Batteriekomponentenhalterteils parallel zu der Grundfläche der ersten Batteriegehäusekomponente und zu der Grundfläche der zweiten Batteriegehäusekomponente.

Vorzugsweise bilden das erste Batteriekomponentenhalterteil und das zweite Batteriekomponentenhalterteil zusammen zumindest eine Aufnahmeeinrichtung. Die Aufnahmeeinrichtung kann einen kreisförmigen freien Querschnitt aufweisen. Das Aufnahmevolumen der Aufnahmeeinrichtung kann durch eine innere Wandung der Aufnahmeeinrichtung teilweise begrenzt werden, wobei die innere Wandung durch einen ersten inneren Wandungsabschnitt des ersten Batteriekomponentenhalterteils und einen zweiten inneren Wandungsabschnitt des zweiten Batteriekomponentenhalterteils gebildet ist.

Ein derart ausgebildetes Batteriegehäuse weist den Vorteil auf, dass Batteriekomponenten, insbesondere Batteriezellen, vereinfacht in den Batteriekomponentenhalter eingesetzt werden können.

Vorzugsweise ist das Batteriegehäuse derart ausgebildet, dass das erste Batteriekomponentenhalterteil monolithisch mit der ersten Batteriegehäusekomponente ausgebildet ist und/oder dass das zweite Batteriegehäusekomponentenhalterteil monolithisch mit der zweiten Batteriegehäusekomponente ausgebildet ist.

Ein derart ausgebildetes Batteriegehäuse weist den Vorteil auf, dass das Batteriegehäuse eine nochmals verbesserte Recyclingfähigkeit aufweist und gleichzeitig vereinfacht hergestellt werden kann, insbesondere in einem Fertigungsschritt hergestellt werden kann.

Vorzugsweise ist das Batteriegehäuse derart ausgebildet, dass der Batteriekomponentenhalter ein drittes Batteriekomponentenhalterteil und ein viertes Batteriekomponentenhalterteil aufweist, wobei das dritte Batteriekomponentenhalterteil mit der ersten Batteriegehäusekomponente und/oder mit der zweiten Batteriegehäusekomponente stoffschlüssig verbunden ist, und wobei das vierte Batteriekomponentenhalterteil mit der ersten Batteriegehäusekomponente und/oder mit der zweiten Batteriegehäusekomponente stoffschlüssig verbunden ist. Das dritte Batteriekomponentenhalterteil weist ein drittes Verbindungsmittel auf, das an einer dritten Seitenfläche des dritten Batteriekomponentenhalterteils angeordnet ist, und/oder das vierte Batteriekomponentenhalterteil weist ein viertes Verbindungsmittel auf, das an einer vierten Seitenfläche des vierten Batteriekomponentenhalterteils angeordnet ist. Das dritte Batteriekomponentenhalterteil ist mit dem vierten Batteriekomponentenhalterteil mittels des dritten Verbindungsmittels und/oder mittels des vierten Verbindungsmittels formschlüssig verbunden.

Ein derart ausgebildetes Batteriegehäuse weist den Vorteil auf, dass Batteriekomponenten, insbesondere Batteriezellen, vereinfacht in den Aufnahmeeinrichtungen des Batteriekomponentenhalters des Batteriegehäuses aufgenommen werden können, und dass das Batteriegehäuse gleichzeitig eine verbesserte Torsions- und Biegesteifigkeit aufweist.

Vorzugsweise ist in Einbaulage des Batteriegehäuses in einem Kraftfahrzeug und bei bestimmungsgemäßen Gebrauch das dritte Batteriekomponentenhalterteil mit dem vierten Batteriekomponentenhalterteil mittels des dritten Verbindungsmittels und/oder mittels des vierten Verbindungsmittels horizontal oder vertikal formschlüssig verbunden.

Vorzugsweise ist das dritte Batteriekomponentenhalterteil mit der ersten Batteriegehäusekomponente und/oder mit der zweiten Batteriegehäusekomponente mittels Verschweißung und/oder Verklebung stoffschlüssig verbunden.

Vorzugsweise ist das vierte Batteriekomponentenhalterteil mit der ersten Batteriegehäusekomponente und/oder mit der zweiten Batteriegehäusekomponente mittels Verschweißung und/oder Verklebung stoffschlüssig verbunden.

Alternativ oder zusätzlich ist das dritte Batteriekomponentenhalterteil und/oder das vierte Batteriekomponentenhalterteil mit der ersten Batteriegehäusekomponente und/oder mit der zweiten Batteriegehäusekomponente formschlüssig und/oder kraftschlüssig verbunden. Die formschlüssige und/oder kraftschlüssige Verbindung kann als eine Verzahnung und/oder als eine Hintergreifung und/oder als eine Klemmverbindung ausgebildet sein.

Die dritte Seitenfläche und/oder die vierte Seitenfläche ist/sind vorzugsweise senkrecht zu der ersten Stirnfläche des ersten Batteriekomponentenhalterteils und/oder zu der zweiten Stirnfläche des zweiten Batteriekomponentenhalterteils angeordnet.

Das dritte Verbindungsmittel und das vierte Verbindungsmittel korrespondieren vorzugsweise miteinander. Beispielsweise kann das dritte Verbindungsmittel als ein Clips ausgebildet sein und das vierte Verbindungsmittel als eine zu dem Clips korrespondierende Clips-Aufnahme. Die Clips-Aufnahme kann als Aufnahmevertiefung ausgebildet sein. Die Aufnahmevertiefung ist vorzugsweise derart ausgebildet, dass der Clips von der Aufnahmevertiefung hintergriffen wird, wenn der Clips in der Aufnahmevertiefung aufgenommen ist.

Das dritte Verbindungsmittel kann als Schnapphaken und das vierte Verbindungsmittel kann als eine zu dem Schnapphaken korrespondierende Schnapphaken-Aufnahme ausgebildet sein. Die Schnapphaken-Aufnahme kann als Aufnahmevertiefung ausgebildet sein. Die Aufnahmevertiefung ist vorzugsweise derart ausgebildet, dass der Schnapphaken von der Aufnahmevertiefung hintergriffen wird, wenn der Schnapphaken in der Aufnahmevertiefung aufgenommen ist.

In einer Einbaulage des Batteriegehäuses, beispielsweise in einem Kraftfahrzeug, verlaufen die dritte Seitenfläche und die vierte Seitenfläche entlang einer vertikalen Richtung. Insbesondere ist die dritte Seitenfläche des dritten Batteriekomponentenhalterteils einer vierten Seitenfläche des vierten Batteriekomponentenhalterteils gegenüberliegend und zu dieser parallel angeordnet.

Vorzugsweise bilden das dritte Batteriekomponentenhalterteil und das vierte Batteriekomponentenhalterteil zusammen zumindest eine Aufnahmeeinrichtung. Die Aufnahmeeinrichtung kann einen kreisförmigen freien Querschnitt aufweisen. Vorzugsweise wird der kreisförmige Querschnitt der Aufnahmeeinrichtung durch das dritte Batteriekomponentenhalterteil und das vierte Batteriekomponentenhalterteil gebildet, wobei das dritte Batteriekomponentenhalterteil und das vierte Batteriekomponentenhalterteil jeweils einen halbkreisförmigen Abschnitt der Aufnahmeeinrichtung bereitstellen. Das Aufnahmevolumen der Aufnahmeeinrichtung kann durch eine innere Wandung der Aufnahmeeinrichtung teilweise begrenzt werden, wobei die innere Wandung durch einen dritten inneren Wandungsabschnitt des dritten Batteriekomponentenhalterteils und einen vierten inneren Wandungsabschnitt des vierten Batteriekomponentenhalterteils gebildet ist.

Vorzugsweise ist das Batteriegehäuse derart ausgebildet, dass der dritte Batteriekomponentenhalterteil monolithisch mit der ersten Batteriegehäusekomponente und/oder mit der zweiten Batteriegehäusekomponente ausgebildet ist, und/oder der vierte Batteriekomponentenhalterteil monolithisch mit der ersten Batteriegehäusekomponente und/oder der zweiten Batteriegehäusekomponente ausgebildet ist.

Ein derart ausgebildetes Batteriegehäuse weist den Vorteil auf, dass Batteriezellen vereinfacht in dem Batteriegehäuse angeordnet werden können und dass das Batteriegehäuse gleichzeitig eine verbessert effiziente Recyclingfähigkeit aufweist.

Vorzugsweise ist das Batteriegehäuse derart ausgebildet, dass die Aufnahmeeinrichtungen jeweils eine Batteriekomponentenauflage aufweisen, wobei zwischen den jeweiligen Batteriekomponentenauflagen und einer Grundfläche der ersten Batteriegehäusekomponente ein Freiraum gebildet ist.

Ein derart ausgebildetes Batteriegehäuse weist den Vorteil auf, dass Batteriekomponenten, insbesondere Batteriezellen, vereinfacht in dem Batteriegehäuse angeordnet werden können und gleichzeitig besser durch ein das Batteriegehäuse fließendes Fluid temperiert werden können.

Die Batteriekomponentenauflage ist dazu ausgebildet, dass eine Batteriekomponente, insbesondere eine Batteriezelle, bei Einsetzen in die Aufnahmeeinrichtung auf der Batteriekomponentenauflage aufliegt.

Die Batteriekomponentenauflage kann als Verengung der Aufnahmeeinrichtung ausgebildet sein. Eine derart ausgebildete Batteriekomponentenauflage weist einen kleineren freien Querschnitt als die Aufnahmeeinrichtung auf.

Die Batteriekomponentenauflage kann als ein separates Bauteil ausgebildet sein. Beispielsweise kann die Batteriekomponentenauflage als ein Einsatz mit einem kleineren freien Querschnitt als die Aufnahmeeinrichtung ausgebildet sein und in der Aufnahmeeinrichtung eingesetzt sein. Alternativ kann die Batteriekomponentenauflage monolithisch mit dem Batteriekomponentenhalter oder der ersten Batteriegehäusekomponente verbunden sein.

Der Freiraum zwischen der Grundfläche der ersten Batteriegehäusekomponente und den Batteriekomponenten kann beispielsweise dazu eingerichtet sein, ein Fluid, insbesondere ein Kühlfluid, aufzunehmen. Das Kühlfluid kann dazu eingesetzt werden, die Batteriekomponenten in dem Batteriegehäuse zu kühlen.

Vorzugsweise ist das Batteriegehäuse derart ausgebildet, dass zumindest eine Batteriekomponentenauflage als Vorsprung ausgebildet ist, der sich von einer ein Aufnahmevolumen der Aufnahmeeinrichtung begrenzenden inneren Wandung in das Aufnahmevolumen erstreckt, in das eine Batteriekomponente aufnehmbar ist, wobei die Batteriekomponentenauflage elastisch verformbar ist, so dass durch Einsetzten einer Batteriekomponente in das Aufnahmevolumen der Aufnahmeeinrichtung die Batteriekomponentenauflage in Richtung der Grundfläche der ersten Batteriegehäusekomponente verformt wird.

Das entsprechend ausgebildete Batteriegehäuse weist den Vorteil auf, dass Batteriekomponenten mit unterschiedlichen Höhenausdehnungen von der Aufnahmeeinrichtung aufgenommen werden können. Denn durch die Verformung der Batteriekomponentenauflage in Richtung der Grundfläche der ersten Batteriegehäusekomponente verlängert sich das Aufnahmevolumen der Aufnahmeeinrichtung. Somit können Längenvariationen von Batteriekomponenten, wie diese herstellungsbedingt häufig vorliegen, verbessert von dem entsprechend ausgebildeten Batteriegehäuse kompensiert werden.

Vorzugsweise ist das Batteriegehäuse derart ausgebildet, dass die Batteriekomponentenauflage bezüglich der inneren Wandung in Richtung der Grundfläche der ersten Batteriegehäusekomponente geneigt ist. Weiter vorzugsweise ist das Batteriegehäuse derart ausgebildet, dass die Batteriekomponentenauflage bezüglich der inneren Wandung auch ohne in das Aufnahmevolumen eingesetzte Batteriekomponente in Richtung der Grundfläche der ersten Batteriegehäusekomponente geneigt ist.

Das entsprechend ausgebildete Batteriegehäuse weist eine nochmals verbesserte Flexibilität hinsichtlich einer Höhenausdehnung der in die Aufnahmeeinrichtung aufzunehmenden Batteriekomponenten auf.

Vorzugsweise ist das Batteriegehäuse derart ausgebildet, dass zumindest eine Batteriekomponentenauflage als Rippe ausgebildet ist, die sich von einer ein Aufnahmevolumen der Aufnahmeeinrichtung begrenzenden inneren Wandung in das Aufnahmevolumen erstreckt, in das eine Batteriekomponente aufnehmbar ist, wobei die zumindest eine Rippe elastisch verformbar ist, so dass durch Einsetzten einer Batteriekomponente in das Aufnahmevolumen der Aufnahmeeinrichtung die zumindest eine Rippe in Richtung der inneren Wandung verformt wird.

Weiter vorzugsweise ist eine Außenkante der Rippe geneigt ausgebildet, so dass ein unterer Bereich der Außenkante der Rippe, der einer Grundfläche der ersten Batteriegehäusekomponente benachbart ist, einen größeren Abstand zur inneren Wandung aufweist als ein oberer Bereich der Außenkante der Rippe, der einer Grundfläche der zweiten Batteriegehäusekomponente benachbart ist.

Vorzugsweise ist das Batteriegehäuse derart ausgebildet, dass eine erste Aufnahmeöffnung der Aufnahmeeinrichtung, die einer Grundfläche der ersten Batteriegehäusekomponente gegenüberliegend angeordnet ist, mittels einer Bodenwand verschlossen ist, wobei die Bodenwand derart ausgebildet ist, dass diese bei Überschreiten einer auf diese ausgeübten vorbestimmten Krafteinwirkung, wie diese durch eine in die Aufnahmeeinrichtung eingesetzt Batteriekomponente bei einem thermischen Durchgehen der Batteriekomponente erzeugt wird, rupturiert wird.

Das entsprechend ausgebildete Batteriegehäuse weist eine verbesserte Betriebssicherheit auf, da im Falle eines thermischen Durchgehens einer Batteriekomponente die entstehenden Gase verbessert abgeleitet werden können.

Die Bodenwand ist vorzugsweise als Membran ausgebildet. Weiter vorzugsweise ist die Bodenwand gekrümmt ausgebildet. Nochmals weiter vorzugsweise ist die Bodenwand derart gekrümmt ausgebildet, dass die der Grundfläche der ersten Batteriegehäusekomponente gegenüberliegende Fläche der Bodenwand konkav gewölbt ist.

Vorzugsweise ist das Batteriegehäuse derart ausgebildet, dass die Bodenwand zumindest eine Sollbruchstelle, vorzugsweise eine Sollbruchlinie aufweist.

Vorzugsweise ist die Sollbruchstelle bzw. die Sollbruchlinien als Dünnstelle der Bodenwand ausgebildet. Beispielsweise ist die Sollbruchstelle bzw. die Sollbruchlinie die Verbindungsstelle bzw. die Verbindungslinie der Bodenwand mit dem Batteriekomponentenhalter.

Vorzugsweise ist das Batteriegehäuse derart ausgebildet, dass die erste Batteriegehäusekomponente eine Mehrzahl von Vorsprüngen aufweist, die sich von einer Grundfläche der ersten Batteriegehäusekomponente in ein Aufnahmevolumen des Batteriegehäuses erstrecken, wobei die Batteriekomponenten auf den Vorsprüngen platzierbar sind, sodass ein Freiraum zwischen der Grundfläche der ersten Batteriegehäusekomponente und den Batteriekomponenten gebildete ist.

Ein derart ausgebildetes Batteriegehäuse weist den Vorteil auf, dass Batteriekomponenten, insbesondere Batteriezellen, verbessert durch ein das Batteriegehäuse fließendes Fluid temperiert werden können, und dass Batteriegehäuse gleichzeitig eine verbessert effiziente Recyclingfähigkeit aufweist.

Die Vorsprünge können monolithisch mit der ersten Batteriegehäusekomponente verbunden sein. Die Vorsprünge können als Zylinder ausgebildet sein.

Die Vorsprünge können einen ersten Batteriekomponentenhalterteil bilden, der auch als Batteriezellenhalter und/oder als Zellhalter bezeichnet werden kann.

Die Vorsprünge können sich jeweils von der Grundfläche der ersten Batteriegehäusekomponente in die Aufnahmeeinrichtungen erstrecken, insbesondere in die Aufnahmevolumina der Aufnahmeeinrichtungen.

Vorzugsweise ist das Batteriegehäuse derart ausgebildet, dass das Batteriegehäuse zumindest eine Klebeeinrichtung aufweist, die mit einer ein Aufnahmevolumen der Aufnahmeeinrichtung begrenzenden inneren Wandung verbunden ist und zum adhesiven Verbinden mit einer in das Aufnahmevolumen aufgenommenen Batteriekomponenten ausgebildet ist.

Das entsprechend ausgebildete Batteriegehäuse weist den Vorteil auf, dass die Batteriekomponenten sicherer in dem Batteriekomponentenhalter befestigt sind.

Vorzugsweise ist die Klebeeinrichtung als Klebeband, vorzugsweise als Doppelklebeband ausgebildet.

Vorzugsweise ist die Klebeeinrichtung umlaufend ausgebildet. D.h., dass die Klebeeinrichtung an der inneren Wandung umlaufend angeordnet ist.

Vorzugsweise ist eine Klebeeinrichtung in einem unteren Bereich der inneren Wandung angeordnet, d.h., dass die Klebeeinrichtung benachbart zu einer Grundfläche der ersten Batteriegehäusekomponente angeordnet ist.

Weiter vorzugsweise ist eine Klebeeinrichtung in einem oberen Bereich der inneren Wandung angeordnet, d.h., dass die Klebeeinrichtung benachbart zu einer Grundfläche der zweiten Batteriegehäusekomponente angeordnet ist.

Vorzugsweise ist das Batteriegehäuse derart ausgebildet, dass die erste Batteriegehäusekomponente und/oder die zweite Batteriegehäusekomponente und/oder der Batteriekomponentenhalter ein gleiches Material aufweisen oder aus einem gleichen Material oder Materialmix gebildet sind.

Ein derart ausgebildetes Batteriegehäuse weist den Vorteil auf, dass das Batteriegehäuse eine nochmals verbessert effiziente Recyclingfähigkeit aufweist.

Das gleiche Material kann als thermoplastischer Kunststoff, insbesondere als ein Polypropylen (PP), als ein Polycarbonat (PC) und/oder als ein Polyamid (PA) ausgebildet sein.

Das gleiche Material kann als ein geschäumter Kunststoff ausgebildet sein. Ein derart ausgebildetes Batteriegehäuse weist den Vorteil auf, dass das Batteriegehäuse eine reduzierte Dichte aufweist und damit leichter ist und dabei gleichzeitig eine verbessert effiziente Recyclingfähigkeit aufweist.

Alternativ kann das gleiche Material als massiver Kunststoff ausgebildet sein. Ein derart ausgebildetes Batteriegehäuse weist den Vorteil auf, dass das Batteriegehäuse eine nochmals verbesserte Torsions- und Biegesteifigkeit und eine gleichzeitig verbesserte Recyclingfähigkeit aufweist.

Der gleiche Materialmix kann ein Kunststoffmaterial als Matrixmaterial und Verstärkungsfasern aufweisen. Die Verstärkungsfasern können als Glasfasern und/oder als Kohlenstofffasern und/oder als Aramidfasern ausgebildet sein. Das Kunststoffmaterial kann als massiver oder geschäumter Kunststoff ausgebildet sein, insbesondere als thermoplastischer Kunststoff wie beispielsweise PP, PC oder PA. Ein derart ausgebildetes Batteriegehäuse weist den Vorteil auf, dass das Batteriegehäuse eine nochmals verbesserte Torsions- und Biegesteifigkeit aufweist.

Das Batteriegehäuse ist derart ausgebildet, dass eine Höhenerstreckung des Batteriekomponentenhalters größer oder gleich einer Höhenerstreckung der Batteriekomponenten ist.

Ein derart ausgebildetes Batteriegehäuse weist den Vorteil auf, dass Batteriekomponenten, insbesondere Batteriezellen, verbessert in den Aufnahmeeinrichtungen des Batteriekomponentenhalters positionierbar sind.

In Einbaulage des Batteriegehäuses, beispielsweise in einem Kraftfahrzeug, verläuft die Höhenerstreckung der Batteriekomponenten und die Höhenerstreckung des Batteriekomponentenhalters in vertikaler Richtung.

Der vorliegenden Erfindung liegt außerdem die Aufgabe zugrunde eine Batterie bereitzustellen, welche eine verbesserte Torsions- und Biegesteifigkeit aufweist und dabei gleichzeitig eine verbessert effiziente Recyclingfähigkeit aufweist.

Diese der vorliegenden Erfindung zugrundeliegende Aufgabe wird durch eine Batterie, aufweisend ein zuvor beschriebenes Batteriegehäuse gelöst, wobei die Batterie eine Vielzahl von Batteriekomponenten aufweist, die jeweils in eine Aufnahmeeinrichtung des Batteriekomponentenhalters aufgenommen sind.

Der vorliegenden Erfindung liegt außerdem die Aufgabe zugrunde ein Kraftfahrzeug bereitzustellen, welches eine Batterie mit einer verbessert effizienten Recyclingfähigkeit aufweist.

Diese der vorliegenden Erfindung zugrundeliegende Aufgabe wird durch ein Kraftfahrzeug mit einer zuvor beschriebenen Batterie gelöst, wobei die Batterie mit dem Elektroantriebsmotor des Kraftfahrzeugs energiegekoppelt ist.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine Schnittdarstellung eines Batteriegehäuses im Bereich einer Aufnahmeeinrichtung gemäß einer ersten Ausführungsform;
- Figur 2:: eine Schnittdarstellung eines Batteriegehäuses im Bereich einer Aufnahmeeinrichtung gemäß einer zweiten Ausführungsform;
- Figur 3:: eine Schnittdarstellung eines Batteriegehäuses im Bereich einer Aufnahmeeinrichtung gemäß einer dritten Ausführungsform;
- Figur 4:: eine Schnittdarstellung eines Batteriegehäuses im Bereich einer Aufnahmeeinrichtung gemäß einer vierten Ausführungsform;
- Figur 5:: eine Schnittdarstellung eines Batteriekomponentenhalters eines Batteriegehäuses gemäß einer fünften Ausführungsform;
- Figur 6:: eine Schnittdarstellung eines Batteriekomponentenhalters eines Batteriegehäuses im Verbindungsbereich eines dritten Batteriekomponentenhalterteils und eines vierten Batteriekomponentenhalterteils gemäß einer sechsten Ausführungsform;
- Figur7:: ein Batteriekomponentenhalter eines Batteriegehäuses gemäß einer siebten Ausführungsform in einer Draufsicht;
- Figur 8:: eine Batterie aufweisend ein Batteriegehäuse gemäß einer achten Ausführungsform in einer Draufsicht;
- Figur 9:: eine Schnittdarstellung eines Batteriegehäuses im Bereich einer Aufnahmeeinrichtung gemäß einer neunten Ausführungsform;
- Figur 10:: eine Schnittdarstellung eines Batteriegehäuses im Bereich einer Aufnahmeeinrichtung gemäß einer zehnten Ausführungsform;
- Figur 11:: eine Schnittdarstellung eines Batteriegehäuses im Bereich einer Aufnahmeeinrichtung gemäß einer elften Ausführungsform; und
- Figur 12:: eine Schnittdarstellung eines Batteriegehäuses im Bereich einer Aufnahmeeinrichtung gemäß einer zwölften Ausführungsform.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

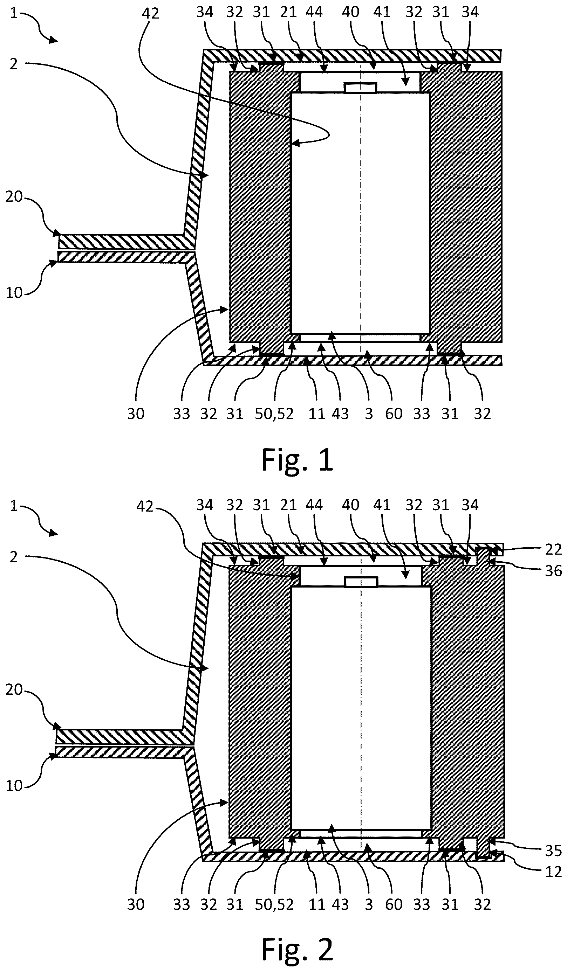

Figur 1 zeigt eine Schnittdarstellung eines Batteriegehäuses 1 zur Aufnahme von einer Vielzahl von Batteriekomponenten 3 im Bereich einer Aufnahmeeinrichtung 40 gemäß einer ersten Ausführungsform. Das Batteriegehäuse 1 weist eine erste Batteriegehäusekomponente 10 und eine zweite Batteriegehäusekomponente 20 auf, die ein Aufnahmevolumen 2 des Batteriegehäuses 1 zumindest teilweise begrenzen. Ferner weist das Batteriegehäuse 1 einen Batteriekomponentenhalter 30 auf, der eine Vielzahl Aufnahmeeinrichtungen 40 zur Aufnahme der Batteriekomponenten 3 aufweist. Der Batteriekomponentenhalter 30 ist sandwichartig zwischen der ersten Batteriegehäusekomponente 10 und der zweiten Batteriegehäusekomponente 20 in dem Aufnahmevolumen 2 des Batteriegehäuses 1 angeordnet und mit der ersten Batteriegehäusekomponente 10 und mit der zweiten Batteriegehäusekomponente 20 stoffschlüssig verbunden. Folglich ist der Batteriekomponentenhalter 30 als Sandwichkern 30 zwischen der ersten Batteriegehäusekomponente 10 und der zweiten Batteriegehäusekomponente 20 in dem Aufnahmevolumen 2 des Batteriegehäuses 1 angeordnet und mit der ersten Batteriegehäusekomponente 10 und mit der zweiten Batteriegehäusekomponente 20 stoffschlüssig verbunden.

Der Batteriekomponentenhalter 30 weist eine Mehrzahl von Verbindungsflächen 31 auf, die stirnseitig an dem Batteriekomponentenhalter 30 angeordnet sind. Der Batteriekomponentenhalter 30 ist mit der ersten Batteriegehäusekomponente 10 und mit der zweiten Batteriegehäusekomponente 20 mittels der Mehrzahl der Verbindungsflächen 31 stoffschlüssig verbunden. Die Verbindungsflächen 31 des Batteriekomponentenhalter 30 sind jeweils als Verbindungsvorsprünge 32 ausgebildet, die jeweils aus einer Stirnfläche 33, 34 des Batteriekomponentenhalters 30 vorragen.

Die Aufnahmeeinrichtung 40 des Batteriekomponentenhalters 30 weist ein Aufnahmevolumen 41 auf, welches durch eine innere Wandung 42 der Aufnahmeeinrichtung 40 teilweise begrenzt wird. Die Batteriekomponenten 3 sind in den jeweiligen Aufnahmevolumina 41 der Aufnahmeeinrichtungen 40 aufgenommen. Die Aufnahmeeinrichtung 40 des Batteriekomponentenhalters 30 weist einen kreisförmigen freien Querschnitt auf. Die Aufnahmeeinrichtung 40 weist ferner eine erste Aufnahmeöffnung 43 und eine der ersten Aufnahmeöffnung 43 gegenüberliegende zweite Aufnahmeöffnung 44 auf. Die erste Aufnahmeöffnung 43 ist einer Grundfläche 11 der ersten Batteriegehäusekomponente 10 gegenüberliegend angeordnet und die zweite Aufnahmeöffnung 44 ist einer Grundfläche 21 der zweiten Batteriegehäusekomponente 20 gegenüberliegend angeordnet.

Die Aufnahmeeinrichtung 40 weist eine Batteriekomponentenauflage 50 auf, auf der die Batteriekomponente 3 aufliegt. Zwischen der Batteriekomponentenauflage 50 und der Grundfläche 11 der ersten Batteriegehäusekomponente 10 ist ein Freiraum 60 gebildet. Der Freiraum 60 ist dazu ausgebildet, Kühlfluid zur Kühlung der Batteriekomponente 3 aufzunehmen. Die Batteriekomponentenauflage 50 ist als Verengung 51 der Aufnahmeeinrichtung 40 ausgebildet.

Figur 2 zeigt eine Schnittdarstellung eines Batteriegehäuses 1 zur Aufnahme von einer Vielzahl von Batteriekomponenten 3 im Bereich einer Aufnahmeeinrichtung 40 gemäß einer zweiten Ausführungsform. Der Batteriekomponentenhalter 30 weist zwei Positioniereinrichtungen 35, 36 auf, die stirnseitig an dem Batteriekomponentenhalter 30 angeordnet sind. Die Positioniereinrichtungen 35, 36 sind als Positionierstifte ausgebildet, wobei die Positionierstifte als Zylinder ausgebildet sind. Die Positioniereinrichtungen 35, 36 sind monolithisch mit dem Batteriekomponentenhalter 30 verbunden. Eine erste Positioniereinrichtung 35 ragt von einer ersten Stirnfläche 33 des Batteriekomponentenhalters 30 vor und ist in einer korrespondierenden ersten Positionieraufnahme 12 der ersten Batteriegehäusekomponente 10 aufgenommen. Eine zweite Positioniereinrichtung 36 ragt von einer zweiten Stirnfläche 34 des Batteriekomponentenhalters 30 vor und ist in einer korrespondierenden zweiten Positionieraufnahme 22 der zweiten Batteriegehäusekomponente 20 aufgenommen. Die Positionieraufnahmen 12, 22 sind jeweils als Positioniervertiefungen ausgebildet.

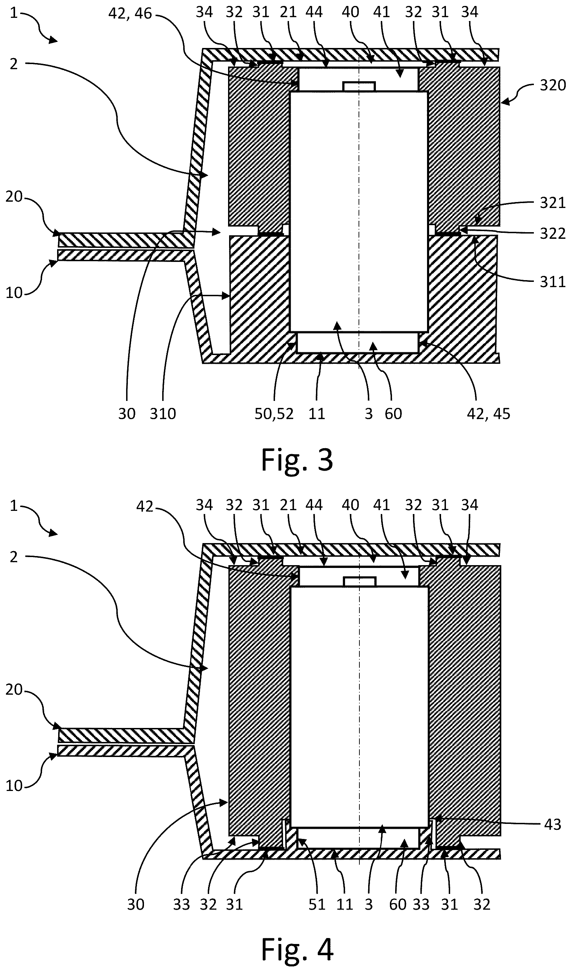

Figur 3 zeigt eine Schnittdarstellung eines Batteriegehäuses 1 im Bereich einer Aufnahmeeinrichtung 40 zur Aufnahme von einer Vielzahl von Batteriekomponenten 3 gemäß einer dritten Ausführungsform. Der Batteriekomponentenhalter 30 weist ein erstes Batteriekomponentenhalterteil 310 und ein zweites Batteriekomponentenhalterteil 320 auf, wobei das erste Batteriekomponentenhalterteil 310 mit der ersten Batteriegehäusekomponente 10 stoffschlüssig verbunden ist und das zweite Batteriekomponentenhalterteil 320 mit der zweiten Batteriegehäusekomponente 20 stoffschlüssig verbunden ist. Eine erste Stirnseite 311 des ersten Batteriekomponentenhalterteils 310 ist einer zweiten Stirnseite 321 des zweiten Batteriekomponentenhalterteils 320 gegenüberliegend angeordnet und mit dieser verbunden.

Die zweite Stirnseite 321 des zweiten Batteriekomponentenhalterteils 320 weist Verbindungvorsprünge 322 auf, die von der zweiten Stirnseite 321 vorragen und die stoffschlüssig mit der ersten Stirnseite 311 des ersten Batteriekomponentenhalterteils 310 verbunden sind.

Das erste Batteriekomponentenhalterteil 310 ist monolithisch mit der ersten Batteriegehäusekomponente 10 ausgebildet.

In der in Figur 3 dargestellten Einbaulage des Batteriegehäuses 1 verlaufen die erste Stirnseite 311 des ersten Batteriekomponentenhalterteils 310 und die zweite Stirnseite 321 des zweiten Batteriekomponentenhalterteils 320 in horizontaler Richtung. Mit anderen Worten weist der Batteriekomponentenhalter 30 eine horizontale Teilung auf, die den Batteriekomponentenhalter 30 in das erste Batteriekomponentenhalterteil 310 und in das zweite Batteriekomponentenhalterteil 320 teilt.

Das erste Batteriekomponentenhalterteil 310 und das zweite Batteriekomponentenhalterteil 320 bilden zusammen die Aufnahmeeinrichtung 40, wobei die innere Wandung 42 der Aufnahmeeinrichtung 40 durch einen ersten inneren Wandungsabschnitt 45 des ersten Batteriekomponentenhalterteils 310 und durch einen zweiten inneren Wandungsabschnitt 46 des zweiten Batteriekomponentenhalterteils 320 gebildet ist. Die Aufnahmeeinrichtung 40 weist einen kreisförmig ausgebildeten freien Querschnitt auf.

Figur 4 zeigt eine Schnittdarstellung eines Batteriegehäuses 1 zur Aufnahme von einer Vielzahl von Batteriekomponenten 3 im Bereich einer Aufnahmeeinrichtung 40 gemäß einer vierten Ausführungsform. Die erste Batteriegehäusekomponente 10 weist eine Mehrzahl von Vorsprüngen 51 auf, die sich von einer Grundfläche 11 der ersten Batteriegehäusekomponente 10 in ein Aufnahmevolumen 2 des Batteriegehäuses 1 erstrecken, wobei die Batteriekomponenten 3 auf den Vorsprüngen 51 platzierbar sind, sodass ein Freiraum 60 zwischen der Grundfläche 11 der ersten Batteriegehäusekomponente 10 und den Batteriekomponenten 2 gebildet ist. Die Vorsprünge 51 bilden einen Batteriezellenhalter. Der Freiraum 60 ist dazu eingerichtet, Kühlfluid aufzunehmen.

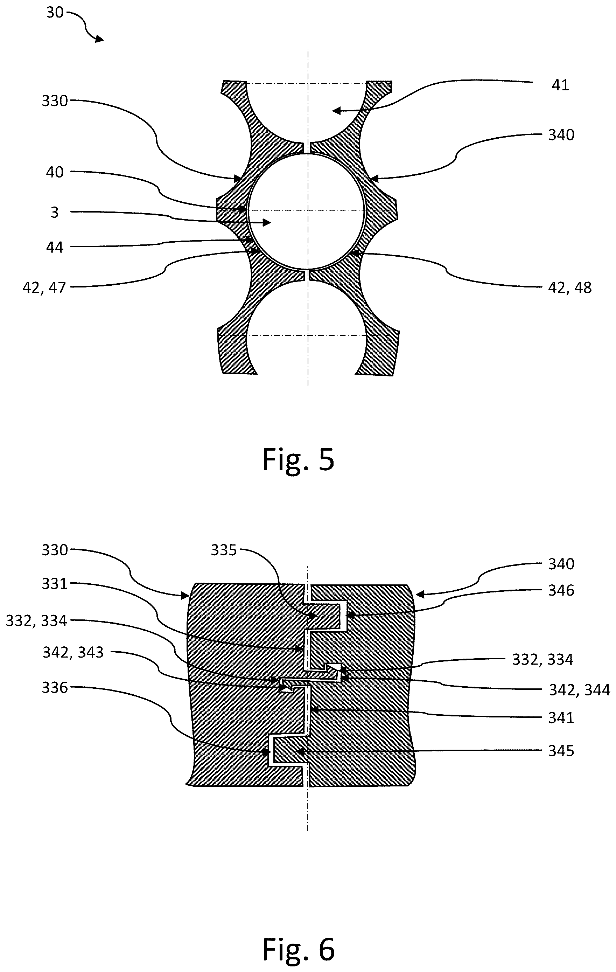

Figur 5 zeigt eine Schnittdarstellung eines Batteriekomponentenhalters 30 eines Batteriegehäuses 1 gemäß einer fünften Ausführungsform. Der Batteriekomponentenhalter 30 weist ein drittes Batteriekomponentenhalterteil 330 und ein viertes Batteriekomponentenhalterteil 340 auf. Das dritte Batteriekomponentenhalterteil 330 kann mit der in Figur 5 nicht dargestellten ersten Batteriegehäusekomponente 10 und/oder mit der der in Figur 5 nicht dargestellten zweiten Batteriegehäusekomponente 20 stoffschlüssig verbunden sein, und das vierte Batteriekomponentenhalterteil 340 kann mit der der in Figur 5 nicht dargestellten ersten Batteriegehäusekomponente 10 und/oder mit der der in Figur 5 nicht dargestellten zweiten Batteriegehäusekomponente 20 stoffschlüssig verbunden sein.

Das dritte Batteriekomponentenhalterteil 330 und das vierte Batteriekomponentenhalterteil 340 bilden zusammen zumindest eine Aufnahmeeinrichtung 40 des Batteriekomponentenhalters 30, wobei die innere Wandung 42 durch einen dritten inneren Wandungsabschnitt 47 und einen vierten inneren Wandungsabschnitt 48 gebildet ist.

Figur 6 zeigt eine Schnittdarstellung eines Batteriekomponentenhalters 30 eines Batteriegehäuses 1 im Verbindungsbereich eines dritten Batteriekomponentenhalterteils 330 und eines vierten Batteriekomponentenhalterteils 340 gemäß einer sechsten Ausführungsform. Das dritte Batteriekomponentenhalterteil 330 weist zwei dritte Verbindungsmittel 332 auf, die an einer dritten Seitenfläche 331 des dritten Batteriekomponentenhalterteils 330 angeordnet sind, und das vierte Batteriekomponentenhalterteil 340 weist zwei vierte Verbindungsmittel 342 auf, die an einer vierten Seitenfläche 341 des vierten Batteriekomponentenhalterteils 340 angeordnet sind, wobei das dritte Batteriekomponentenhalterteil 330 mit dem vierten Batteriekomponentenhalterteil 340 mittels der dritten Verbindungsmittel 332 und mittels der vierten Verbindungsmittel 342 formschlüssig verbunden ist.

Ein drittes Verbindungsmittel 332 ist als Schnapphaken 333 ausgebildet und ein viertes Verbindungsmittel 342 ist als korrespondierende vierte Schnapphaken-Aufnahme 344 ausgebildet. Das weitere vierte Verbindungsmittel 342 ist als Schnapphaken 343 ausgebildet und das weitere dritte Verbindungsmittel 332 ist als korrespondierende dritte Schnapphaken-Aufnahme 334 ausgebildet.

Das dritte Batteriekomponentenhalterteil 330 weist einen dritten Positionierzapfen 335 auf, der an der dritten Seitenfläche 331 angeordnet ist und mit einer vierten Aufnahmevertiefung 346, die an der vierten Seitenfläche 341 des vierten Batteriekomponentenhalterteils 340 angeordnet ist, formschlüssig verbunden ist. In Einbaulage und bei bestimmungsmäßigem Gebrauch des Batteriegehäuses 1 ist der dritte Positionszapfen 335 mit der vierten Aufnahmevertiefung 346 vertikal formschlüssig verbunden.

Das vierte Batteriekomponentenhalterteil 340 weist einen vierten Positionierzapfen 345 auf, der an der vierten Seitenfläche 341 angeordnet ist und mit einer dritten Aufnahmevertiefung 336, die an der dritten Seitenfläche 331 des dritten Batteriekomponentenhalterteils 330 angeordnet ist, formschlüssig verbunden ist. In Einbaulage und bei bestimmungsmäßigem Gebrauch des Batteriegehäuses 1 ist der vierte Positionszapfen 345 mit der dritten Aufnahmevertiefung 336 vertikal formschlüssig verbunden.

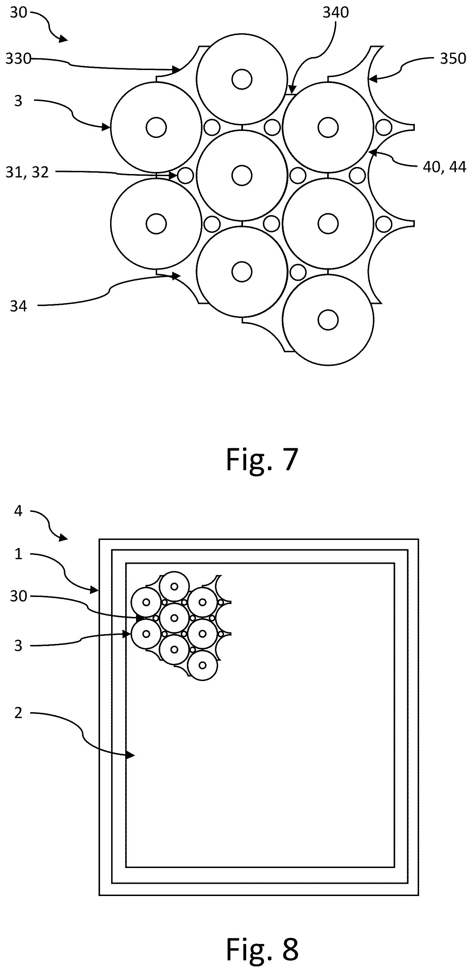

Figur 7 zeigt einen Batteriekomponentenhalter 30 eines Batteriegehäuses 1 gemäß einer siebten Ausführungsform in einer Draufsicht. Der Batteriekomponentenhalter 30 weist Verbindungsvorsprünge 32 auf, die aus einer zweiten Stirnfläche 34 vorragen und an drei Aufnahmeeinrichtungen 40 angrenzend angeordnet sind. Die Verbindungsvorsprünge 32 sind kreisförmig in äquidistanten Abständen zueinander um die zweite Aufnahmeöffnung 44 der Aufnahmeeinrichtung 40 angeordnet.

Der Batteriekomponentenhalter 30 weist zusätzlich zu dem dritten Batteriekomponentenhalterteil 330 und dem vierten Batteriekomponentenhalterteil 340 ein fünftes Batteriekomponentenhalterteil 350. Das vierte Batteriekomponentenhalterteil 340 ist mit dem fünften Batteriekomponentenhalterteil 350 in gleicher Art und Weise verbunden wie das vierte Batteriekomponentenhalterteil 340 mit dem dritten Batteriekomponentenhalterteil 330 verbunden ist. Der Batteriekomponentenhalter 30 kann weitere Batteriekomponentenhalterteile aufweisen.

Figur 8 zeigt eine Batterie 4 aufweisend ein Batteriegehäuse 1 gemäß einer achten Ausführungsform in einer Draufsicht. Die Batterie 4 weist eine Vielzahl von Batteriekomponenten 3 auf, die in dem Batteriekomponentenhalter 30 aufgenommen sind, wobei der Batteriekomponentenhalter 30 in dem Aufnahmevolume 2 des Batteriegehäuses 1 angeordnet ist.

Figur 9 zeigt eine Schnittdarstellung eines Batteriegehäuses 1 zur Aufnahme von einer Vielzahl von Batteriekomponenten 3 im Bereich einer Aufnahmeeinrichtung 40 gemäß einer neunten Ausführungsform. Die Batteriekomponentenauflage 50 ist als Vorsprung 50 oder als eine Mehrzahl von Vorsprüngen 50 ausgebildet, der/die sich von der das Aufnahmevolumen 41 der Aufnahmeeinrichtung 40 begrenzenden inneren Wandung 42 in das Aufnahmevolumen 41 erstreckt/erstrecken, in das eine Batteriekomponente 3 aufnehmbar ist. Der Aufbau des in Figur 9 dargestellten Batteriegehäuses 1 entspricht dem in Figur 1 dargestellten Batteriegehäuse 1, wobei die Batteriekomponentenauflage 50 elastisch verformbar ist, so dass durch Einsetzten einer Batteriekomponente 3 in das Aufnahmevolumen 41 der Aufnahmeeinrichtung 40 die Batteriekomponentenauflage 50 in Richtung der Grundfläche 11 der ersten Batteriegehäusekomponente 10 verformt wird.

Bei dem in Figur 9 dargestellten Batteriegehäuse 1 ist die Batteriekomponentenauflage 50 bezüglich der inneren Wandung 42 in Richtung der Grundfläche 22 der ersten Batteriegehäusekomponente 10 geneigt auch ohne in das Aufnahmevolumen 41 eingesetzte Batteriekomponente 3.

Figur 10 zeigt eine Schnittdarstellung eines Batteriegehäuses 1 zur Aufnahme von einer Vielzahl von Batteriekomponenten 3 im Bereich einer Aufnahmeeinrichtung 40 gemäß einer zehnten Ausführungsform. Die erste Aufnahmeöffnung 43 der Aufnahmeeinrichtung 40, die der Grundfläche 11 der ersten Batteriegehäusekomponente 10 gegenüberliegend angeordnet ist, ist mittels einer Bodenwand 49 verschlossen, wobei die Bodenwand 49 ist derart ausgebildet, dass diese bei Überschreiten einer auf diese ausgeübten vorbestimmten Krafteinwirkung, wie diese durch eine in die Aufnahmeeinrichtung 40 eingesetzt Batteriekomponente 3 bei einem thermischen Durchgehen der Batteriekomponente 3 erzeugt wird, rupturiert wird. Hierzu weist die Bodenwand 49 eine Sollbruchlinie auf, die im dargestellten Ausführungsbeispiel als eine Dünnstelle der Verbindung der Bodenwand 49 mit der Batteriekomponentenauflage 50 ausgebildet ist. Der restliche Aufbau des in Figur 10 dargestellten Batteriegehäuses 1 entspricht dem in Figur 1 dargestellten Batteriegehäuse 1.

Figur 11 zeigt eine Schnittdarstellung eines Batteriegehäuses 1 zur Aufnahme von einer Vielzahl von Batteriekomponenten 3 im Bereich einer Aufnahmeeinrichtung 40 gemäß einer elften Ausführungsform. Das in Figur 11 dargestellte Batteriegehäuse 1 entspricht dem in Figur 10 dargestellten Batteriegehäuse 1, wobei die Bodenwand 49 als Membran 49 ausgebildet ist.

Figur 12 zeigt eine Schnittdarstellung eines Batteriegehäuses 1 zur Aufnahme von einer Vielzahl von Batteriekomponenten 3 im Bereich einer Aufnahmeeinrichtung 40 gemäß einer zwölften Ausführungsform. Das in Figur 12 dargestellte Batteriegehäuse 1 weist zumindest eine Klebeeinrichtung 70 auf, die mit der das Aufnahmevolumen 41 der Aufnahmeeinrichtung 30 begrenzenden inneren Wandung 42 verbunden ist und zum adhesiven Verbinden mit einer in das Aufnahmevolumen 41 aufgenommenen Batteriekomponenten 3 ausgebildet ist. In dem dargestellten Ausführungsbeispiel weist das Batteriegehäuse 1 zwei Klebeeinrichtungen 70 auf, die jeweils als Klebeband 70 ausgebildet sind. Ein erstes Klebeband 70 ist in einem unteren Bereich der inneren Wandung 42 angeordnet, so dass das erste Klebeband 70 benachbart zu der Grundfläche 11 der ersten Batteriegehäusekomponente 10 angeordnet ist. Ein zweites Klebeband 70 ist in einem oberen Bereich der inneren Wandung 42 angeordnet, so dass das zweite Klebeband 70 benachbart zu der Grundfläche 21 der zweiten Batteriegehäusekomponente 20 angeordnet ist. Zwischen der inneren Wandung 42, die zwischen dem ersten Klebeband 70 und dem zweiten Klebeband 70 verläuft, und der Batteriekomponente 3 ist ein Freiraum gebildet. Der restliche Aufbau des in Figur 12 dargestellten Batteriegehäuses 1 entspricht dem in Figur 1 dargestellten Batteriegehäuse 1.

### Bezugszeichenliste

- 1: Batteriegehäuse
- 2: Aufnahmevolumen (des Batteriegehäuses)
- 3: Batteriekomponente
- 4: Batterie
- 10: Erste Batteriegehäusekomponente
- 11: Grundfläche (der ersten Batteriegehäusekomponente)
- 12: Erste Positionieraufnahme (der ersten Batteriegehäusekomponente)
- 20: Zweite Batteriegehäusekomponente
- 21: Grundfläche (der zweiten Batteriegehäusekomponente)
- 22: Zweite Positionieraufnahme (der zweiten Batteriegehäusekomponente)
- 30: Batteriekomponentenhalter
- 31: Verbindungsflächen
- 32: Verbindungsvorsprung (des Batteriekomponentenhalters)
- 33: Erste Stirnfläche
- 34: Zweite Stirnfläche
- 35: Erste Positioniereinrichtung (des Batteriekomponentenhalters)
- 36: Zweite Positioniereinrichtung (des Batteriekomponentenhalters)
- 310: Erstes Batteriekomponentenhalterteil
- 311: Erste Stirnseite (des ersten Batteriekomponentenhalterteils)
- 320: Zweites Batteriekomponentenhalterteil
- 321: Zweite Stirnseite (des zweiten Batteriekomponentenhalterteils)
- 322: Verbindungsvorsprung (des zweiten Batteriekomponentenhalterteils)
- 330: Drittes Batteriekomponentenhalterteil
- 331: Dritte Seitenfläche (des dritten Batteriekomponentenhalterteils)
- 332: Drittes Verbindungsmittel
- 333: Dritter Schnapphaken
- 334: Dritte Schnapphaken-Aufnahme
- 335: Dritter Positionierzapfen
- 336: Dritte Aufnahmevertiefung
- 340: Viertes Batteriekomponentenhalterteil
- 341: Vierte Seitenfläche (des vierten Batteriekomponentenhalterteils)
- 342: Viertes Verbindungsmittel
- 343: Vierter Schnapphaken
- 344: Vierte Schnapphaken-Aufnahme
- 345: Vierter Positionierzapfen
- 346: Vierte Aufnahmevertiefung
- 350: Fünftes Batteriekomponentenhalterteil
- 40: Aufnahmeeinrichtung
- 41: Aufnahmevolumen (der Aufnahmeeinrichtung)
- 42: innere Wandung (der Aufnahmeeinrichtung)
- 43: erste Aufnahmeöffnung (der Aufnahmeeinrichtung)
- 44: zweite Aufnahmeöffnung (der Aufnahmeeinrichtung)
- 45: erster innerer Wandungsabschnitt
- 46: zweiter innerer Wandungsabschnitt
- 47: dritter innerer Wandungsabschnitt
- 48: vierter innerer Wandungsabschnitt
- 49: Bodenwand / Membran
- 50: Batteriekomponentenauflage
- 51: Vorsprung
- 52: Verengung (der Aufnahmeeinrichtung)
- 60: Freiraum (zwischen der Grundfläche der ersten Batteriegehäusekomponente und den Batteriekomponenten)
- 70: Klebeeinrichtung / Klebeband

## Patentansprüche

1. Batteriegehäuse (1) zur Aufnahme von einer Vielzahl von Batteriekomponenten (3), aufweisend
- eine erste Batteriegehäusekomponente (10);
- eine zweite Batteriegehäusekomponente (20);
- zumindest einen Batteriekomponentenhalter (30), der eine Vielzahl Aufnahmeeinrichtungen (40) zur Aufnahme der Batteriekomponenten (3) aufweist;
- wobei der Batteriekomponentenhalter (30) sandwichartig zwischen der ersten Batteriegehäusekomponente (10) und der zweiten Batteriegehäusekomponente (20) angeordnet ist; und
- wobei der Batteriekomponentenhalter (30) mit der ersten Batteriegehäusekomponente (10) und/oder mit der zweiten Batteriegehäusekomponente (20) stoffschlüssig verbunden ist,
wobei das Batteriegehäuse (1) **dadurch gekennzeichnet ist, dass** eine Höhenerstreckung des Batteriekomponentenhalters (30) größer oder gleich einer Höhenerstreckung der Batteriekomponenten (3) ist.

2. Batteriegehäuse (1) nach Anspruch 1, **gekennzeichnet durch** die folgenden Merkmale:
- der Batteriekomponentenhalter (30) weist eine Mehrzahl von Verbindungsflächen (31) auf, die stirnseitig an dem Batteriekomponentenhalter (30) angeordnet sind; und
- der Batteriekomponentenhalter (30) ist mit der ersten Batteriegehäusekomponente (10) und/oder mit der zweiten Batteriegehäusekomponente (20) mittels der Mehrzahl der Verbindungsflächen (31) stoffschlüssig verbunden.

3. Batteriegehäuse (1) nach Anspruch 2, **dadurch gekennzeichnet, dass** die Verbindungsflächen (31) des Batteriekomponentenhalters (30) jeweils als Verbindungsvorsprünge (32) ausgebildet sind, die aus einer Stirnfläche (33, 34) des Batteriekomponentenhalters (30) vorragen.

4. Batteriegehäuse (1) nach Anspruch 3, **dadurch gekennzeichnet, dass** die Verbindungsvorsprünge (32) bei Draufsicht auf eine Stirnfläche (33, 34) des Batteriekomponentenhalters (30) an drei Aufnahmeeinrichtungen (40) angrenzend angeordnet sind.

5. Batteriegehäuse (1) nach einem der vorhergehenden Ansprüche, **gekennzeichnet durch** die folgenden Merkmale:
- die erste Batteriegehäusekomponente (10) weist eine Mehrzahl von Verbindungsvorsprüngen auf, die an einer einem Aufnahmevolumen (2) des Batteriegehäuses (1) zugewandten Grundfläche (11) angeordnet sind und sich in das Aufnahmevolumen (2) erstrecken; und/oder
- die zweite Batteriegehäusekomponente (20) weist eine Mehrzahl von Verbindungsvorsprüngen auf, die an einer dem Aufnahmevolumen (2) des Batteriegehäuses (1) zugewandten Grundfläche (21) angeordnet sind und sich in das Aufnahmevolumen (2) erstrecken; und
- der Batteriekomponentenhalter (30) ist mit der ersten Batteriegehäusekomponente (10) und/oder mit der zweiten Batteriegehäusekomponente (20) mittels der Mehrzahl der Verbindungsvorsprünge stoffschlüssig verbunden.

6. Batteriegehäuse (1) nach einem der vorhergehenden Ansprüche, **dadurch gekennzeichnet, dass** der Batteriekomponentenhalter (30) mit der ersten Batteriegehäusekomponente (10) und/oder mit der zweiten Batteriegehäusekomponente (20) zusätzlich formschlüssig und/oder kraftschlüssig verbunden ist.

7. Batteriegehäuse (1) nach einem der vorhergehenden Ansprüche, **gekennzeichnet durch** die folgenden Merkmale:
- der Batteriekomponentenhalter (30) weist ein erstes Batteriekomponentenhalterteil (310) und ein zweites Batteriekomponentenhalterteil (320) auf;
- das erste Batteriekomponentenhalterteil (310) ist mit der ersten Batteriegehäusekomponente (10) stoffschlüssig verbunden und das zweite Batteriekomponentenhalterteil (320) ist mit der zweiten Batteriegehäusekomponente (20) stoffschlüssig verbunden;
- eine erste Stirnseite (311) des ersten Batteriekomponentenhalterteils (310) ist einer zweiten Stirnseite (321) des zweiten Batteriekomponentenhalterteils (320) gegenüberliegend angeordnet und ist mit dieser verbunden.

8. Batteriegehäuse (1) nach Anspruch 7, **gekennzeichnet durch** die folgenden Merkmale:
- das erste Batteriekomponentenhalterteil (310) ist monolithisch mit der ersten Batteriegehäusekomponente (10) ausgebildet; und/oder
- das zweite Batteriekomponentenhalterteil (320) ist monolithisch mit der zweiten Batteriegehäusekomponente (20) ausgebildet.

9. Batteriegehäuse (1) nach einem der vorhergehenden Ansprüche, **gekennzeichnet durch** die folgenden Merkmale:
- der Batteriekomponentenhalter (30) weist ein drittes Batteriekomponentenhalterteil (330) und ein viertes Batteriekomponentenhalterteil (340) auf;
- das dritte Batteriekomponentenhalterteil (330) ist mit der ersten Batteriegehäusekomponente (10) und/oder mit der zweiten Batteriegehäusekomponente (20) stoffschlüssig verbunden, und das vierte Batteriekomponentenhalterteil (340) ist mit der ersten Batteriegehäusekomponente (10) und/oder mit der zweiten Batteriegehäusekomponente (20) stoffschlüssig verbunden;
- das dritte Batteriekomponentenhalterteil (330) weist ein drittes Verbindungsmittel (332) auf, das an einer dritten Seitenfläche (331) des dritten Batteriekomponentenhalterteils (330) angeordnet ist, und/oder das vierte Batteriekomponentenhalterteil (340) weist ein viertes Verbindungsmittel (342) auf, das an einer vierten Seitenfläche (341) des vierten Batteriekomponentenhalterteils (340) angeordnet ist;
- das dritte Batteriekomponentenhalterteil (330) ist mit dem vierten Batteriekomponentenhalterteil (340) mittels des dritten Verbindungsmittels (332) und/oder mittels des vierten Verbindungsmittels (342) formschlüssig verbunden.

10. Batteriegehäuse (1) nach Anspruch 9, **gekennzeichnet durch** die folgenden Merkmale:
- der dritte Batteriekomponentenhalterteil (330) ist monolithisch mit der ersten Batteriegehäusekomponente (10) und/oder mit der zweiten Batteriegehäusekomponente (20) ausgebildet; und/oder
- der vierte Batteriekomponentenhalterteil (340) ist monolithisch mit der ersten Batteriegehäusekomponente (10) und/oder der zweiten Batteriegehäusekomponente (20) ausgebildet.

11. Batteriegehäuse (1) nach einem der vorhergehenden Ansprüche, **gekennzeichnet durch** folgende Merkmale:
- die Aufnahmeeinrichtungen (40) weisen jeweils eine Batteriekomponentenauflage (50) auf; und
- zwischen den jeweiligen Batteriekomponentenauflagen (50) und einer Grundfläche (11) der ersten Batteriegehäusekomponente (10) ist ein Freiraum (60) gebildet.

12. Batteriegehäuse (1) nach Anspruch 11, **gekennzeichnet durch** folgende Merkmale:
- zumindest eine Batteriekomponentenauflage (50) ist als Vorsprung (50) ausgebildet, der sich von einer ein Aufnahmevolumen (41) der Aufnahmeeinrichtung (40) begrenzenden inneren Wandung (42) in das Aufnahmevolumen (41) erstreckt, in das eine Batteriekomponente (3) aufnehmbar ist; und
- die Batteriekomponentenauflage (50) ist elastisch verformbar, so dass durch Einsetzten einer Batteriekomponente (3) in das Aufnahmevolumen (41) der Aufnahmeeinrichtung (40) die Batteriekomponentenauflage (50) in Richtung der Grundfläche (11) der ersten Batteriegehäusekomponente (10) verformt wird.

13. Batteriegehäuse (1) nach Anspruch 11 oder 12, **gekennzeichnet durch** folgende Merkmale:
- zumindest eine Batteriekomponentenauflage (50) ist als Rippe ausgebildet, die sich von einer ein Aufnahmevolumen (41) der Aufnahmeeinrichtung (40) begrenzenden inneren Wandung (42) in das Aufnahmevolumen (41) erstreckt, in das eine Batteriekomponente (3) aufnehmbar ist; und
- die zumindest eine Rippe ist elastisch verformbar, so dass durch Einsetzten einer Batteriekomponente (3) in das Aufnahmevolumen (41) der Aufnahmeeinrichtung (40) die zumindest eine Rippe in Richtung der inneren Wandung (42) verformt wird.

14. Batteriegehäuse (1) nach einem der vorhergehenden Ansprüche, **gekennzeichnet durch** folgende Merkmale:
- eine erste Aufnahmeöffnung (43) der Aufnahmeeinrichtung (40), die einer Grundfläche (11) der ersten Batteriegehäusekomponente (10) gegenüberliegend angeordnet ist, ist mittels einer Bodenwand (49) verschlossen; und
- die Bodenwand (49) ist derart ausgebildet, dass diese bei Überschreiten einer auf diese ausgeübten vorbestimmten Krafteinwirkung, wie diese durch eine in die Aufnahmeeinrichtung (40) eingesetzt Batteriekomponente (3) bei einem thermischen Durchgehen der Batteriekomponente (3) erzeugt wird, rupturiert wird.

15. Batteriegehäuse (1) nach Anspruch 13, **dadurch gekennzeichnet, dass** die Bodenwand (49) zumindest eine Sollbruchstelle, vorzugsweise eine Sollbruchlinie aufweist.

16. Batteriegehäuse (1) nach einem der vorhergehenden Ansprüche, **gekennzeichnet durch** die folgenden Merkmale:
- die erste Batteriegehäusekomponente (10) weist eine Mehrzahl von Vorsprüngen (51) auf, die sich von einer Grundfläche (11) der ersten Batteriegehäusekomponente (10) in ein Aufnahmevolumen (2) des Batteriegehäuses (1) erstrecken;
- die Batteriekomponenten (3) sind auf den Vorsprüngen (51) platzierbar, sodass ein Freiraum (60) zwischen der Grundfläche (11) der ersten Batteriegehäusekomponente (10) und den Batteriekomponenten (3) gebildet ist.

17. Batteriegehäuse (1) nach einem der vorhergehenden Ansprüche, **dadurch gekennzeichnet, dass** das Batteriegehäuse (1) zumindest eine Klebeeinrichtung (70) aufweist, die mit einer ein Aufnahmevolumen (41) der Aufnahmeeinrichtung (30) begrenzenden inneren Wandung (42) verbunden ist und zum adhesiven Verbinden mit einer in das Aufnahmevolumen (41) aufgenommenen Batteriekomponenten (3) ausgebildet ist.

18. Batteriegehäuse (1) nach einem der vorhergehenden Ansprüche, **dadurch gekennzeichnet, dass** die erste Batteriegehäusekomponente (10) und/oder die zweite Batteriegehäusekomponente (20) und/oder der Batteriekomponentenhalter (30) ein gleiches Material aufweisen oder aus einem gleichen Material oder Materialmix gebildet sind.

19. Batterie (4), aufweisend
- ein Batteriegehäuse (1) nach einem der vorhergehenden Ansprüche; und
- eine Vielzahl von Batteriekomponenten (3), die jeweils in eine Aufnahmeeinrichtung (40) des Batteriekomponentenhalters (30) aufgenommen sind.

20. Kraftfahrzeug mit einer Batterie (4) nach Anspruch 19, wobei die Batterie (4) mit einem Elektroantriebsmotor des Kraftfahrzeugs energiegekoppelt ist.
